# EUROPEAN PATENT APPLICATION

(11) **EP 2 950 410 A1**
(43) Date of publication of application: **02.12.2015**
(21) Application number: 14743642.2
(22) Date of filing: 20.01.2014
(51) Int. Cl.: H02G 11/00, B60R 16/02

(54) **ROUTING STRUCTURE FOR PROTECTIVE TUBE FOR POWER SUPPLY**

(30) Priority: 22.01.2013 JP 2013009139
(71) Applicant: Yazaki Corporation, Minato-ku Tokyo 108-8333 (JP)
(72) Inventor: SEKINO, Tsukasa, Makinohara-shi Shizuoka 421-0407 (JP); YAMASHITA, Hiroshi, Makinohara-shi Shizuoka 421-0407 (JP); WATANABE, Hiroaki, Makinohara-shi Shizuoka 421-0407 (JP); TERADA, Tomoyasu, Makinohara-shi Shizuoka 421-0407 (JP)
(74) Representative: Grünecker Patent- und Rechtsanwälte PartG mbB
(86) International application number: PCT/JP2014/050928
(87) International publication number: WO 2014/115676

(57) **Abstract**

The present invention is to smoothly bend a wire harness equipped with a protection tube between a sliding structure body and a fixed structure body without causing buckling or the like and to prevent interference with the fixed structure body.

A wire harness equipped with a bendable protection tube is swingably arranged between a fixed structure body and a sliding structure body, a rigidity imparting portion is formed on a side surface of an end portion of the protection tube in the fixed structure body side, and the end portion of the protection tube constantly extends in a linear manner by the rigidity imparting portion when the sliding structure body is opened or closed. The rigidity imparting portion is configured by a uniformly shaped portion on a tip side of the end portion of the protection tube and a gradually-changing shaped portion on a base end side of the end portion.

## Description

### Technical Field

The present invention relates to an arrangement structure of a power-supplying protection tube which is configured to arrange a wire harness covered with a protection tube having a rigidity imparting portion from a vehicle body to a sliding door of, for example, an automobile.

### Background Art

Conventionally, various arrangement structures of a wire harness have been proposed which are configured such that the wire harness equipped with a corrugated tube is horizontally arranged from a vehicle body to a sliding door of an automobile and that the wire harness equipped with the corrugated tube is bent between the vehicle body and the sliding door in an opening/closing direction of the door according to opening and closing of the sliding door.

For example, Patent Literature 1 discloses a structure in which a horizontal guide rail is provided on a case fixed to a sliding door, a swing member is swingably provided on a slider engaged with the guide rail in a front/back direction (horizontal direction) of a vehicle, one end portion of a synthetic resin-made corrugated tube of an outer periphery of the wire harness is held in the swing member, and ribs are provided up and down on the corrugated tube in a longitudinal direction of the tube, thereby preventing sagging of the wire harness. The wire harness is configured by inserting a plurality of electric wires into the corrugated tube.

Patent Literature 1 discloses a rib protruding higher beyond a projection from a circumferential recessed groove of the corrugated tube, a rib formed in the range from the circumferential recessed groove to the projection, or a rib having the inside of a solid or a hollow.

In addition, Patent Literature 2 discloses a structure in which a plate spring is provided in a protector fixed to a sliding door, a wire harness equipped with a corrugated tube is biased upward by the plate spring, the wire harness equipped with the corrugated tube is arranged from a lower opening of the protector to a harness holding member on a vehicle body side, an external force receiving portion formed by a projection portion and a recessed portion is provided on a side surface of the corrugated tube, and the external force receiving portion is disposed at a bent outside of a bent portion of the corrugated tube in the vicinity of the harness holding member on the vehicle body side, thereby smoothly bending the corrugated tube.

In addition, Patent Literature 3 discloses a structure in which a power supplying cable not being a corrugated tube is inserted into a synthetic resin-made cable guide obtained by connecting a plurality of pierce members and the cable guide is bent between a sliding door and a vehicle body into a substantially S-shape in plan view.

### Citation List

### Patent Literature

Patent Literature 1: JP 2009-11136 A (Figs. 1 to 5)
Patent Literature 2: JP 2006-192939 A (Figs. 1 to 6)
Patent Literature 3: JP 2004-34759 A (Fig. 1)

### Summary of Invention

### Technical Problem

However, in the above structure disclosed in Patent Literature 1, there was a concern that variation in bending operation (form) of the wire harness in the opening/closing direction of the door between the sliding door and the vehicle body was caused during opening or closing of the sliding door.

Furthermore, in the above structure disclosed in Patent Literature 2, since the slack (excess length) of the wire harness between the sliding door and the vehicle body during opening or closing of the sliding door is absorbed by biasing force of the plate spring in the protector, there was a concern that the size of a power supplying structure was increased, or since projections or recessed portions are formed over the entire length of the corrugated tube, there was a concern that the cost and weight of the corrugated tube were increased.

Furthermore, in the above structure disclosed in Patent Literature 3, since a cable guide formed by connecting a number of pierce members is used, there was a concern that the size, weight, and bulk of the power supplying structure were increased.

These concerns are not limited to the sliding door of the automobile, but may also occur in a sliding door of the vehicle other than the automobile or in a sliding door of apparatuses or the like other than the vehicle. The sliding door or the like is collectively referred to as a sliding structure body, and the vehicle body, the apparatus body or the like is collectively referred to as a fixed structure body.

In consideration of the above problems, an object of the present invention is to provide an arrangement structure of a power-supplying protection tube which can smoothly bend the wire harness equipped with the protection tube between the sliding structure body and the fixed structure body without causing buckling or the like to improve bending durability of the wire harness equipped with the protection tube and prevent interference between the protection tube and the fixed structure body.

### Solution to Problem

In order to achieve the above object, an arrangement structure of a power-supplying protection tube according to one aspect of the present invention is characterized in that a wire harness equipped with a bendable protection tube is swingably arranged between a fixed structure body and a sliding structure body, a rigidity imparting portion is formed on a side surface of an end portion of the protection tube in the fixed structure body side, and the end portion of the protection tube constantly extends in a linear manner by the rigidity imparting portion when the sliding structure body is opened or closed.

According to the above configuration, since the end portion of the protection tube linearly extends along the fixed structure body in the fixed structure body side when the sliding structure body is fully closed, the end portion of the protection tube when the sliding structure body is initially opened is maintained (providing motivation of U-shape bending) at the same position as that when the sliding structure body is fully closed, the protection tube is smoothly bent into a substantially U-shape from the end portion of the protection tube to a middle portion when the sliding structure body is half-opened, the protection tube portion from the middle portion to the sliding structure body is bend into a substantially reverse U-shape at the same time, and the protection tube is smoothly bent into a substantially S-shape between the fixed structure body and the sliding structure body. Thus, bending durability of the wire harness (wire harness formed by inserting a plurality lines of electric wires into the protection tube) equipped with the protection tube is improved.

In addition, since the end portion of the protection tube linearly extends (protrudes) toward the sliding structure body in the fixed structure body side when the sliding structure body is fully opened, the middle portion of the protection tube is separated to the sliding structure body side (outside) from the fixed structure body and the middle portion of the protection tube is prevented from interfering with the fixed structure body. As the protection tube, a bellows-shaped corrugated tube is preferred.

An arrangement structure of a power-supplying protection tube according to a first preferred aspect of the present invention is characterized in that: in the arrangement structure of a power-supplying protection tube according to the one aspect of the present invention, the rigidity imparting portion is configured by a uniformly shaped portion disposed on a tip side of the end portion of the protection tube and a gradually-changing shaped portion disposed on a base end side of the end portion.

According to the above configuration, the uniformly shaped portion of the rigidity imparting portion increases rigidity of the end portion of the protection tube, the gradually-changing shaped portion of the rigidity imparting portion gradually absorbs bending stress when the protection tube is bent to prevent stress concentration, and thus the base end of the end portion of the protection tube is prevented from being folded and bent. The expression "disposed on a base end side of the end portion" means "disposed in a direction separating along the end portion from the tip of the end portion".

An arrangement structure of a power-supplying protection tube according to a second preferred aspect of the present invention is characterized in that: in the arrangement structure of a power-supplying protection tube according to the one aspect or the first preferred aspect of the present invention, the rigidity imparting portion is formed on only one of the side surface positioned in an opening direction when the sliding structure body is fully opened.

According to the above configuration, when the sliding structure body is fully opened, the protection tube is oriented to the opening direction of the sliding structure body from the fixed structure body and the rigidity imparting portion on one side surface of the end portion of the protection tube is a rear side of the protection tube and is hidden from the outside, so that the appearance is improved.

An arrangement structure of a power-supplying protection tube according to a third preferred aspect of the present invention is characterized in that: in the arrangement structure of a power-supplying protection tube according to any of the one aspect to the second preferred aspect of the present invention, the end portion of the protection tube is disposed at an opening angle of 45 degrees or less in the opening direction of the sliding structure body when the sliding structure body is fully closed.

According to the above configuration, from when the sliding structure body is half-closed to when the structure body is fully opened, the end portion of the protection tube on the fixed structure body side is easily reversed in the opening direction of the sliding structure body, and the protection tube is smoothly reversed without being folded and bent or being hooked.

### Advantageous Effects of Invention

According to the one aspect of the present invention, the end portion of the protection tube linearly extends when the sliding structure body is fully closed and the protection tube is smoothly bent into a substantially S-shape when the sliding structure body is half-opened, so that the bending durability of the wire harness equipped with the protection tube can be improved. In addition, the end portion of the protection tube linearly extends when the sliding structure body is fully opened and the middle portion of the protection tube is separated from the fixed structure body, so that the interference with the fixed structure body and the damage of the protection tube associated with the interference can be prevented. These make it possible to improve the reliability of normal power supply to the sliding structure body.

According to the first preferred aspect of the present invention, the uniformly shaped portion of the rigidity imparting portion increases the rigidity of the end portion of the protection tube and the gradually-changing shaped portion of the rigidity imparting portion gradually absorbs the bending stress of the end when the protection tube is bent, so that the base end of the end portion of the protection tube is prevented from being folded and bent or from the stress concentration, the protection tube is further smoothly bent in the S-shape, and thus the bending durability of the wire harness equipped with the protection tube can be further improved.

According to the second preferred aspect of the present invention, when the sliding structure body is fully opened, the protection tube is oriented to the opening direction of the sliding structure body from the fixed structure body and the rigidity imparting portion on one side surface of the end portion of the protection tube is a rear side of the protection tube and is hidden from the outside, so that the appearance is improved.

According to the third preferred aspect of the present invention, from when the sliding structure body is half-closed to when the structure body is fully opened, since the end portion of the protection tube on the fixed structure body side is easily reversed in the opening direction of the sliding structure body, the protection tube is smoothly reversed and thus the bending durability of the wire harness equipped with the protection tube can be improved.

### Brief Description of Drawings

Fig. 1 is a plan view illustrating an embodiment of an arrangement structure of a power-supplying protection tube according to the present invention.
Fig. 2A illustrates a first example of a form of one end portion of the power-supplying protection tube; Fig. 2A is a plan view.
Fig. 2B illustrates a first example of a form of one end portion of the power-supplying protection tube; Fig. 2B is a cross-sectional view taken along a line A-A of Fig. 2A.
Fig. 3A illustrates an example of a power supply device on a vehicle body side; Fig. 3A is a perspective view of a fully closed state of the sliding door.
Fig. 3B illustrates an example of a power supply device on a vehicle body side; Fig. 3B is a perspective view of a fully opened state of the sliding door.
Fig. 4 is a front view illustrates an example of a power supply device on a sliding door side.
Fig. 5A illustrates a second example of a form of one end portion of the power-supplying protection tube; Fig. 5A is a side view.
Fig. 5B illustrates a second example of a form of one end portion of the power-supplying protection tube; Fig. 5B is a cross-sectional view taken along a line B-B of Fig. 5A.
Fig. 6 is a plan view illustrating a third example of a form of one end portion of the power-supplying protection tube.
Fig. 7 is a plan view illustrating a fourth example of a form of one end portion of the power-supplying protection tube.

### Description of Embodiments

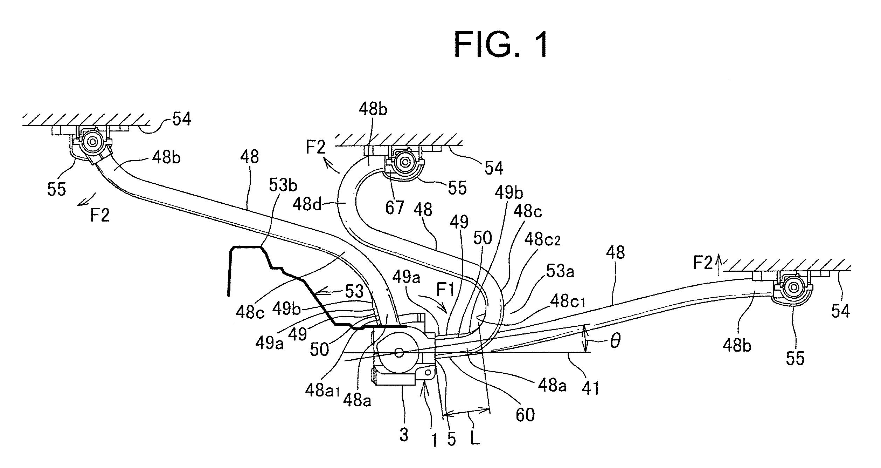

Figs. 1 to 3B illustrate an arrangement structure of a power-supplying protection tube according to an embodiment of the present invention. In Fig. 1, a fully closed state, a half-opened state, and a fully opened state of a sliding door are illustrated by solid lines from the right side of Fig. 1 for convenience, respectively.

As illustrated in Fig. 1, the arrangement structure of such a power-supplying protection tube 48 is characterized in that a wire harness (hereinafter, simply referred to as a corrugated tube) equipped with the corrugated tube (protection tube) 48 is smoothly bent into a substantially S-shape in plan view between a sliding door (sliding structure body) 54 and a vehicle body (fixed structure body) 53 of an automobile when the sliding door is half-opened and in that a rib 49 as a rigidity imparting portion is provided on one side surface of one end portion 48a of the corrugated tube 48 on the vehicle body side to prevent interference with a lower back end portion 53b of an entrance 53a of the vehicle body 53 when the sliding door is fully opened.

A power supply device 1 on the vehicle body side is disposed below the entrance 53a, a power supply device 55 on the sliding door side is disposed on a lower portion of the sliding door 54, the corrugated tube 48 is arranged between the power supply device 1 on the vehicle body side and the power supply device 55 on the sliding door side 55, the one end portion 48a having the rib (rigidity imparting portion) 49 of the corrugated tube 48 is held in (fixed to) the power supply device 1 on the vehicle body side, and the other end portion 48b having a normal form (not having the rigidity imparting portion) of the corrugated tube 48 is held in (fixed to) the power supply device 55 on the sliding door side.

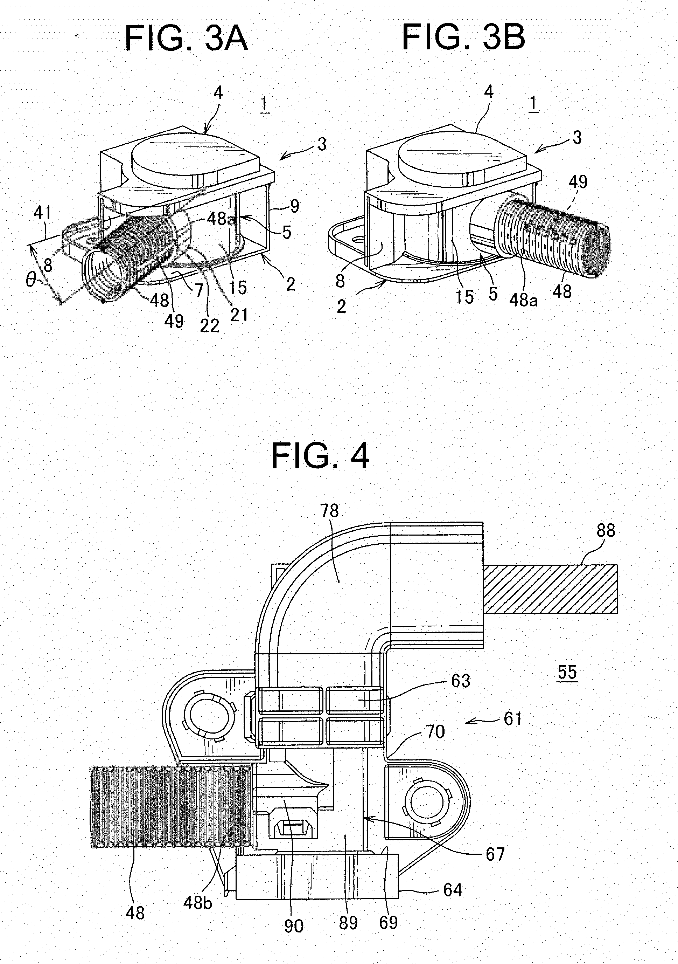

As illustrated in Figs. 3A and 3B, the power supply device 1 on the vehicle body side includes a swing member (rotary member) 5 which holds the one end portion 48a provided with the rib (rigidity imparting portion) 49 of the corrugated tube 48 and a support member 3 which swingably (rotatably) supports the swing member 5 in an opening/closing direction (front/back direction) of the sliding door. One end (tip) side of the one end portion 48a having the rib 49 of the corrugated tube 48 is inserted and held into/in a cylindrical harness lead-out portion (lead-out wall) 21 of the swing member 5. A groove 22 through which the rib 49 is inserted is provided in an inner surface on one side of the harness lead-out portion 21.

As illustrated in Fig. 4, the power supply device 55 on the sliding door side includes a swing member (rotary member) 67 which holds the other end portion 48b having the normal form (not having the rigidity imparting portion) of the corrugated tube 48 and a support member 61 which swingably (rotatably) supports the swing member 67 in the opening/closing direction (front/back direction) of the door.

As illustrated in the left side of Fig. 1, when the sliding door 54 is fully opened, the rib (rigidity imparting portion) 49 on the one end portion 48a of the corrugated tube 48 is provided on a side surface 48a₁ of corrugated tube 48 on the back side of the vehicle, so that the rib is not seen from the outer side (sliding door side) of the vehicle by a person who tries to get in the vehicle when the sliding door 54 is fully opened. Thus, the deterioration in appearance caused by the rib 49 on the one end portion 48a of the corrugated tube 48 is prevented.

As illustrated in the right side of Fig. 1, since the rib 49 on the one end portion 48a of the corrugated tube 48 is positioned along a surface of the sliding door 54 on an inner side of the vehicle when the sliding door 54 is fully closed, naturally, the rib 49 is not seen from the outer side of the vehicle and the rib 49 is also not seen from the inner side (vehicle cabin side) of the vehicle, so that the deterioration in appearance does not occur.

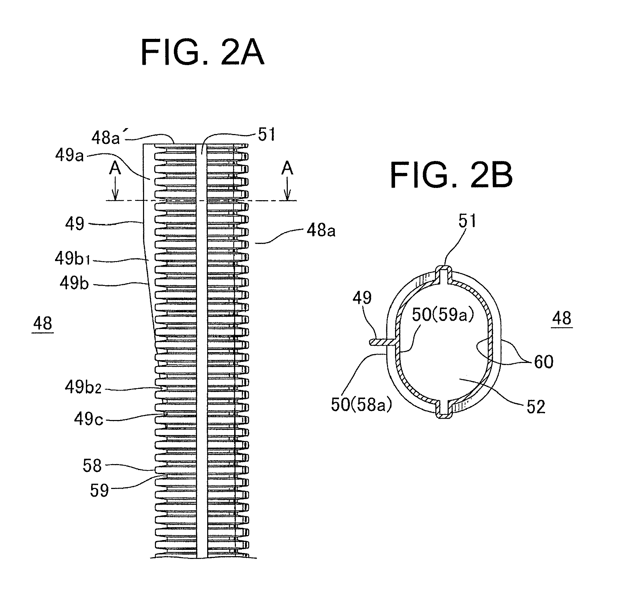

As illustrated in Figs. 2A and 2B, the rib 49 of the corrugated tube (protection tube) 48 includes a straight portion (uniformly shaped portion) 49a which extends in a uniform cross-sectional shape toward the other end from the tip (one end) 48a' of the corrugated tube 48 at a short distance in a longitudinal direction of the tube and an inclined portion (gradually-changing shaped portion) 49b which extends by gradually lowering the height of the rib into an inclined shape in the longitudinal direction of the tube from the straight portion 49a to the other end of the tube at a length equal to or longer than the straight portion.

By such a shape of the rib, a rib termination 49c (see Figs. 2A and 2B) on the one end portion 48a of the corrugated tube 48 led out from the power supply device 1 on the vehicle body side illustrated in Fig. 1 is prevented from being folded and bent. That is, since the straight portion (uniformly shaped portion) 49a of the rib 49 has higher rigidity compared to the inclined portion (gradually-changing shaped portion) 49b, the one end portion 48a of the corrugated tube 48 linearly extends in the range of the straight portion (uniformly shaped portion) 49a of the rib 49, and since the rigidity of the inclined portion (gradually-changing shaped portion) 49b of the rib 49 is gradually lowered compared to the straight portion (uniformly shaped portion) 49a, the one end portion 48a of the corrugated tube 48 gradually starts to bend in the range of the inclined portion (gradually-changing shaped portion) 49b of the rib 49 and the inclined portion (gradually-changing shaped portion) 49b of the rib 49 gradually absorbs bending stress of the corrugated tube 48, thereby preventing the folding and bending of the corrugated tube 48 caused by an excessive stress load.

As illustrated in Figs. 2A and 2B, the corrugated tube 48 is formed in an oval cross-sectional shape, a long diameter portion of the corrugated tube 48 in Fig. 1 is disposed in an up-down direction, and a short diameter portion is disposed in a right-left direction (as illustrated in the right side of Fig. 1, when the sliding door is fully closed) or in a front/back direction. Thus, bendability of the corrugated tube portion beyond the range of the rib 49 is ensured when the sliding door 54 is opened or closed. The rib 49 is disposed on the center of one sidewall (side surface) 50 which is a short diameter side of the corrugated tube 48. In the description, directions of front, back, right, left, up and down coincide with directions of the vehicle. The sliding door 54 illustrated in Fig. 1 is mounted on the left side of the vehicle and is closed forward and opened backward.

In Figs. 2A and 2B, upper and lower hollow ribs 51 on the long diameter side of the corrugated tube 48 are existing ribs which prevents sagging of the corrugated tube 48 in Fig. 1. In this example, the rib (rigidity imparting portion) 49 on the one end portion 48a of the corrugated tube 48 is also applicable to a corrugated tube with no upper and lower ribs 51 for preventing sagging. In addition, the rib (rigidity imparting portion) 49 is also applicable to a corrugated tube of a circular cross-section.

As illustrated in Figs. 2A and 2B, the corrugated tube 48 alternately has circumferential projections (ridge portions) 58 and recessed grooves (valley portions) 59 at an equal pitch in the longitudinal direction of the tube, and the rib (rigidity imparting portion) 49 is provided at one sidewall (side surface) 50 (the inner peripheral wall or bottom wall 59a of the recessed groove 59 and an outer peripheral wall 58a of the projection 58) on the short diameter side of the corrugated tube 48. The solid rib 49 is formed in a plate shape and perpendicularly protrudes outward from the one sidewall 50. An inward recessed groove (not illustrated) is formed at an inner portion (radial inside) of the projection 58, the inward recessed groove communicates with an inner harness insertion space 52 of the corrugated tube 48, the projection 58 has a side end wall on both sides in the longitudinal direction of the tube, the rib 49 is also orthogonally or intersectingly continuous with the side end wall of the projection 58, and the projections 58 and recessed grooves 59 form a bellows-shaped portion having a vertical (longitudinal) cross-section of a rectangular wave shape, respectively.

The rib (rigidity imparting portion) 49 is erected integrally from an outer surface of the inner peripheral wall (bottom wall) 59a of the recessed groove 59 and an outer surface of the outer peripheral wall 58a of the projection 58, the straight portion (uniformly shaped portion) 49a of the rib 49 and a high portion 49b₁ of the inclined portion (gradually-changing shaped portion) 49b continuous with the straight portion 49a protrude higher than the projection 58, and a low termination-side portion 49b₂ of the inclined portion 49b of the rib 49 is positioned lower than the projection 58 and, for example, is intersectingly and integrally continuous with the outer surface of the inner peripheral wall (bottom wall) 59a of the recessed groove 59.

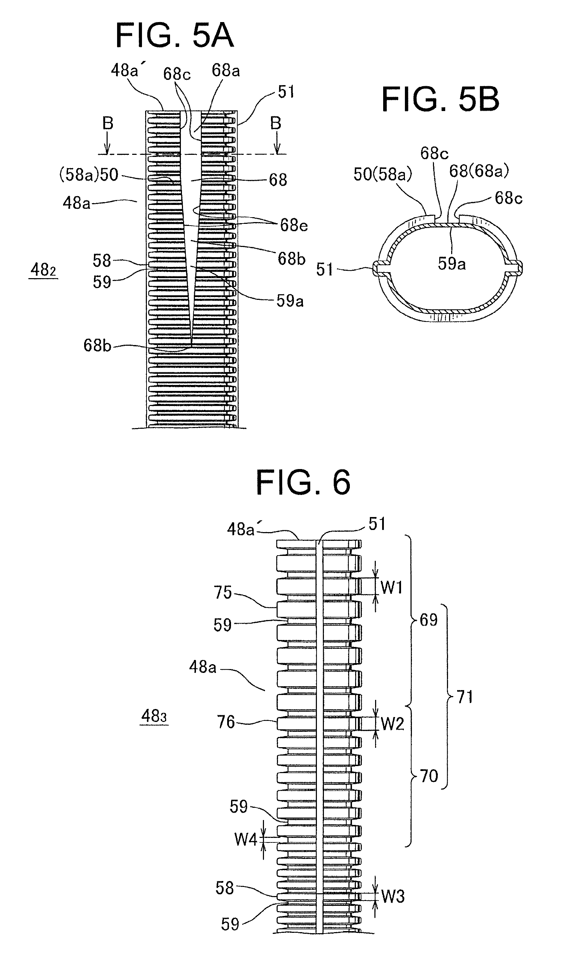

Further, the straight portion 49a of the rib 49 can be set to have substantially, for example, the same height as the projection 58 depending on depths or plate thicknesses of the projections and recessed grooves 58 and 59 of the corrugated tube 48. In addition, the rib 49 can be formed in the hollow as in the rib 51 for the sagging prevention. A transverse cross-sectional shape (see Fig. 2B) of the rib 49 as the rigidity imparting portion is not limited to a rectangular plate shape, but may be a trapezoidal shape or a triangular shape. In addition, it is also effective to provide various rigidity imparting portions illustrated in Figs. 5A to 7 to be described below, instead of the rib 49, on the one end portion 48a of the corrugated tube 48.

Although the ribs 49 can be provided at both side surfaces (both sidewalls) of the one end portion 48a of the corrugated tube 48, respectively, when the sliding door is fully closed as illustrated in the right side of Fig. 1, the rib on the vehicle-inside sidewall 60 of the one end portion 48a of the corrugated tube 48 hinders the extension of the vehicle-inside sidewall (bending outer side) 50 of the one end portion 48a, so that there is a concern that a middle portion continuous with the one end portion 48a of the corrugated tube 48 is hardly smoothly bent in a substantially U-shape when the sliding door is half-opened as illustrated in the center of Fig. 1.

In order words, since the rib 49 on the vehicle-outside sidewall (side surface) 50 of the corrugated tube 48, in a case where the sliding door is fully closed as illustrated in the right side of Fig. 1, is continuous with a bending inner side 48c₁ of the middle portion 48c continuous with the one end portion 48a of the corrugated tube 48 in a case where the sliding door is half-opened as illustrated in the center of Fig. 1, the extension (bending) of the bending outer side 48c₂ of the middle portion 48c is not hindered and the bending inner side 48c₁ of the middle portion 48c is compressed without extending, thereby contributing to the smooth bending of the corrugated tube 48 into the substantially S-shape in plan view without hindering at all the compression (bending) of the bending inner side 48c₁ of the middle portion 48c. This is also similarly applied to a case where various rigidity imparting portions illustrated in Figs. 5A to 7 to be described below are provided on the one end portion 48a of the corrugated tube 48, instead of the rib 49.

The corrugated tube 48 and the rib 49 on the one end portion 48a thereof illustrated in Figs. 2A and 2B are formed in such a manner that, for example, an annular resin material (not illustrated) is subjected to extrusion molding, the annular resin material is subjected to vacuum molding or pressure molding in circumferential projection/recessed portions on the inner side of a two-split type of mold (not illustrated) to form the recessed grooves 59 and the projections 58 and the plate-like rib 49 is partially and integrally molded in an axial groove on the inner surface of one or the other mold. Alternatively, after the annular resin material is subjected to the vacuum molding or the pressure molding in the projection/recessed portions on the inner side of both molds to form the recessed groove 59 and the projection 58, thereby forming the corrugated tube body, the plate-like rib 49 is partially formed at only the one end portion 48a of the corrugated tube body by the extrusion molding.

As illustrated in the right side of Fig. 1, when the sliding door 54 is fully closed, the corrugated tube 48 is forward pulled from the power supply device 1 on the vehicle body side to the power supply device 55 on the sliding door side and thus extends along the outer surface of the vehicle body 53 or the inner surface of the sliding door 54 in the front and back direction.

At this time, the rib (rigidity imparting portion) 49 on one side surface of the one end portion 48a of the corrugated tube 48 led out from the power supply device 1 of the vehicle body side linearly and straight maintains the one end portion 48a of the corrugated tube 48, so that a swing member 5 of the power supply device 1 on the vehicle body side as illustrated in Fig. 3A is maintained in a position of being rotated toward the front side of the vehicle to prepare the next opening operation of the sliding door 54. Further, Figs. 3A and 3B illustrate the power supply device 1 on the vehicle body side which is reversed from left to right compared to that of Fig. 1.

When the sliding door 54 starts the opening operation from the fully closed state of the sliding door 54 illustrated in the right side of Fig. 1, as illustrated in the center of Fig. 1, the one end portion 48a of the corrugated tube 48 linearly extend straight to the front side of the vehicle in the range of dimension L by the rib 49 on the one side surface of the one end portion 48a of the corrugated tube 48 and the swing member 5 of the power supply device 1 on the vehicle body side is maintained in the position of being rotated toward the front side of the vehicle as illustrated in Fig. 3A, so that the one end portion 48a of the corrugated tube 48 is not bent and the corrugated tube 48 is smoothly bent into a substantially S-shape in plan view without being hooked, buckled, or the like between the power supply device 1 of the vehicle body side and the power supply device 55 of the sliding door side.

That is, the middle portion 48c continuous with the one end portion 48a of the corrugated tube 48 is bent backward into a substantially U-shape (substantially U-shaped bent portion being indicated by reference numeral 48c) in plan view in the state where the one end portion 48a of the corrugated tube 48 linearly extends forward (may extend to the slight outer side of the vehicle) by imparting the rigidity to the rib 49 without being bent backward and, at the same time, the other end portion 48b of the corrugated tube 48 led out backward from the power supply device 55 (see Fig. 4) on the sliding door side is bent forward over the longitudinal middle portion 48c of the corrugated tube 48 into a substantially reversed U-shape (substantially reversed U-shaped bent portion being indicated by reference numeral 48) in plan view when the sliding door is substantially fully closed (state of being led out backward) as illustrated in the right side of Fig. 1. Thus, the corrugated tube 48 is smoothly bent into a substantially S-shape in plan view between both of the power supply devices 1 and 55.

As a result, bending durability of the corrugated tube 48 is improved while the sliding door is being opened and the sliding door 54 can be smoothly opened with a small force. Since the corrugated tube 48 is bent into a substantially S-shape in plan view by the rib 49 on the one end portion 48a of the corrugated tube 48 even when the sliding door 54 is closed, the bending durability of the corrugated tube 48 is also improved when the sliding door is closed and the sliding door 54 is smoothly closed with a small force.

If the rib 49 is not provided on the one end portion 48a of the corrugated tube 48, the one end portion 48a of the corrugated tube 48 is bent to the back side of the vehicle when, for example, the sliding door 54 is forcefully opened from the fully closed state of the sliding door illustrated in the right side of Fig. 1 and the buckling or the like (state where the corrugated tube tube 48 is compressed in the longitudinal direction) of the corrugated tube 48 occurs between the power supply device 1 on the vehicle body side and the closest power supply device 55 on the sliding door side when the sliding door 54 is half-opened as described in the center of Fig. 1, so that there is a concern that the corrugated tube is not smoothly bent in the substantially S-shape. By the rib 49 on the one side surface of the one end portion 48a of the corrugated tube 48, such a concern is eliminated and the corrugated tube 48 is smoothly bent into the substantially S-shape in plan view at all times.

The sliding door 54 comes in closely contact with the vehicle body 53 when being fully closed and is spaced outward vehicle along a curved portion of a guide rail (not illustrated) on the vehicle body side during an initial open state, and the corrugated tube 48 is bent into the substantially S-shape in plan view between both of the power supply devices 1 and 55 while both of the power supply devices 1 and 55 oppositely approach each other from the right to the left when the sliding door 54 is half-opened.

When the sliding door 54 is being opened by further moving backward from the half-opened state of the sliding door illustrated in the center of Fig. 1, the rib 49 on the one side surface of the one end portion 48a of the corrugated tube 48 led out from the power supply device 1 on the vehicle body side maintains the one end portion 48a of the corrugated tube 48 in a state of being linearly extended and the swing member 5 of the power supply device 1 on the vehicle body side rotates (swings) toward the back side of the vehicle.

Then, in the fully opened state of the sliding door illustrated in the left side of Fig. 1, the corrugated tube 48 is pulled toward the power supply device 55 on the sliding door side moved backward from the power supply device 1 on the vehicle body side, the one end portion 48a of the corrugated tube 48 linearly extends by the rib 49 on the one side surface, and the swing member 5 of the power supply device 1 on the vehicle body side is prevented from being swung further backward by a back stopper sidewall 9 (see Figs. 3A and 3B) of the support member 3, so that the one end portion 48a of the corrugated tube 48 protrudes to the outer side of the vehicle from the power supply device 1 on the vehicle body side in a substantially thickness direction (precisely, slightly-obliquely back direction) of the sliding door without being bent backward and the middle portion 48c continuous with the one end portion 48a of the corrugated tube 48 is bent backward in a curved shape (bent portion being indicated by reference numeral 48c) while protruding to the outer side of the vehicle.

Thus, the longitudinal middle portion 48c of the corrugated tube 48 is positioned at the outer side of the vehicle and the front side of the vehicle compared to an outward protruding back end portion 53b of the entrance 53a on the vehicle body 53, so that the interference between the longitudinal middle portion 48c of the corrugated tube 48 and the back end portion 53b of the entrance 53a on the vehicle body 53 is prevented and wear and damage of the corrugated tube 48 caused by the interference are prevented.

If the rib 49 is not provided on the one side surface of the one end portion 48a of the corrugated tube 48, since the one end portion 48a of the corrugated tube 48 is directly bend backward from the power supply device 1 on the vehicle body side in the fully opened state of the sliding door illustrated in the left side of Fig. 1, and thus there is a concern that the middle portion 48c continuous with the one end portion 48a of the corrugated tube 48 approaches the back end portion 53b of the entrance 53a on the vehicle body 53 to cause the interference. By the rib 49 on the side surface of the one end portion 48a of the corrugated tube 48, the interference between the vehicle body 53 and the corrugated tube 48 is reliably prevented.

As illustrated in the right side and the center of Fig. 1 and as an angle (opening angle) θ illustrated in Fig. 3A, a rotating end position of the swing member 5 of the power supply device 1 on the vehicle body side inward the vehicle body when the sliding door 54 is fully closed is a position which is slightly inclined to the outer side of the vehicle with respect to a virtual reference line 41 in a front/back direction (parallel to the sliding door 54) of the vehicle, and the one end portion 48a of the corrugated tube 48 led out from the swing member 5 is preferably inclined to the outer side of the vehicle in a linear manner by an angle θ.

Preferably, the angle θ is in the range from 0 degree to 45 degrees (0° < θ ≤ 45°). In order to eliminate the concern that the corrugated tube 48 is seen from the inner side (interior) of the vehicle when the sliding door 54 is fully closed, the angle θ is preferably about 10 to 15 degrees.

As illustrated in Figs. 3A and 3B, when the power supply device 1 on the vehicle body side is configured such that front and back vertical sidewalls 8 and 9 for stopping the rotation of the swing member are provided in the support member 3 which rotatably supports the swing member 5 and the angle of the front sidewall 8 is inclined to the outer side of the vehicle from a rotation center axis of the swing member 5 by the angle θ with respect to a virtual reference line 41 of the front/back direction of the vehicle, the other side surface of the harness lead-out wall 21 of the swing member 5 comes in closely contact with the front sidewall 8 when the sliding door is fully closed, and thus the rotating end position (a state where the one end portion 48a of the corrugated tube 48 is inclined by the angle θ) of the corrugated tube 48 can be obtained.

When the one end portion 48a of the corrugated tube 48 is linearly inclined to the outer side of the vehicle by the angle θ when the sliding door is fully closed as illustrated in the right side of Fig. 1, the corrugated tube 48 can be smoothly shifted, for example, from the bent state of the substantially S-shape in plan view when the sliding door is half-opened as illustrated in the center of Fig. 1 to the backward reverse state when the sliding door is fully opened as illustrated in the left side of Fig. 1. Thus, it is also possible to the bending durability of the corrugated tube 48.

Spring members (torsion coil springs; not illustrated) are provided in the power supply device 1 on the vehicle body side and the power supply device 55 on the sliding door side illustrated in Figs. 1, 3A and 3B, and 4, respectively, so that the swing member 5 of the power supply device 1 on the vehicle body side can be biased toward the vehicle body 53 by the spring member in a clockwise as indicated by an arrow F1 in Fig. 1 and the swing member 67 of the power supply device 55 on the sliding door side can be biased toward the sliding door 54 by the spring member in a clockwise as indicated by an arrow F2 in Fig. 1.

In this case, the annular spring member (torsion coil spring) is housed inside an upper cover 4 of the support member 3 in the power supply device 1 on the vehicle body side in Figs. 3A and 3B and the annular spring member (torsion coil spring) is housed inside a lower cover 64 of the support member 61 in the power supply device 55 on the sliding door side in Fig. 4.

In the fully closed state of the sliding door as illustrated in the right side of Fig. 1, the spring member of the power supply device 1 on the vehicle body side biases the swing member 5 toward the vehicle body as indicated by the arrow F1 together with the one end portion 48a of the corrugated tube 48 which is provided with the rib 49 and the bending of the corrugated tube 48 into the substantially S-shape in plan view is reliably motivated by a synergy with the rib 49 and thus is further easily performed when the sliding door is half-opened as illustrated in the center of Fig. 1.

Furthermore, in the half-opened state of the sliding door as illustrated in the center of Fig. 1, the spring member of the power supply device 1 on the vehicle body side biases the swing member 5 toward the vehicle body as indicated by the arrow F1 together with the one end portion 48a of the corrugated tube 48 which is provided with the rib 49 and the middle portion 49c continuous with the one end portion 48a of the corrugated tube 48 is spaced forward from the back end portion 53b of the entrance 53a on the vehicle body 53, so that the interference with the back end portion 53b of the entrance 53a is further reliably prevented by the synergy with the rib 49.

Naturally, it is needless to say that, only by the action of the rib (rigidity imparting portion) 49 without using the spring member of the power supply device 1 on the vehicle body side, the corrugated tube 48 is smoothly bent in the substantially S-shape and the interference between the corrugated tube 48 and the vehicle body 53 is prevented. Rather, when the spring member of the power supply device 1 on the vehicle body side is eliminated, the power supply device 1 on the vehicle body side can be simplified in structure, be reduced in weight, and be lowered in cost.

When the spring member (torsion coil spring) is used in the power supply device 55 on the sliding door side, the spring member of the power supply device 55 on the sliding door side biases the swing member 67 of the power supply device 55 toward the outer side of the vehicle as indicated an arrow F2 together with the other end portion 48b of the corrugated tube 48 when the sliding door 54 is fully closed as illustrated in the right side of Fig. 1 and the corrugated tube 48 on the sliding door side is promoted to be bent into a reverse U-shape (a robust portion indicated by reference numeral 48d) in plan view when the sliding door is half-opened as illustrated in the center of Fig. 1, so that the corrugated tube 48 is further smoothly bent in a substantially S-shape between both of the power supply devices 1 and 55 and reverse operation of the corrugated tube 48 is further smoothly performed when the sliding door is fully opened from the half-opened state of the sliding door.

In addition, when the sliding door is fully opened as illustrated in the left side of Fig. 1, the other end portion 48b of the corrugated tube 48 on the sliding door side is biased to the back side of the vehicle as indicated by the arrow F2 and thus the corrugated tube 48 is promoted (motivated) to be bent in the substantially S-shape when the sliding door is half-opened from the fully opened state of the sliding door 54.

Even in a case where the spring member of the power supply device 55 on the sliding door side is not used, when the rotating end position of the swing member 5 of the power supply device 1 on the vehicle body side is set to a position of being inclined toward the slightly outer side of the vehicle by the angle θ when the sliding door 54 is fully closed as illustrated in the right side of Figs. 1 and 3A, the reverse operation of the corrugated tube 48 can be smoothly performed when the sliding door 54 is fully opened from the fully closed state or the half-opened state of the sliding door 54, so that the spring member of the power supply device 55 on the sliding door side is eliminated or the spring member of the power supply device 55 on the sliding door side is set smaller in spring force and thus power supply device 55 on the sliding door side can be reduced in weight and be lowered in cost.

As illustrated in Fig. 3A, the power supply device 1 on the vehicle body side is configured such that the annular swing member 5 is rotatably and pivotally supported between a lower horizontal board portion 7 of a base member 2 and an upper cover member 4 in the support member 3. The board portion 7 of the base member 2 and the cover member 4 are co-fixed to the vehicle body 53 by screws or the like. The support member 3 is configured by the base member 2 and the cover member 4.

The swing member 5 has the cylindrical harness lead-out portion 21 protruding toward the sliding door from the annular outer peripheral wall 15, the one end portion 48a of the corrugated tube 48 is held in the harness lead-out portion 21 (a rib (not illustrated) on the inner periphery of the harness lead-out portion 21 is engaged with the recessed groove 59 (see Figs. 2A and 2B) of the corrugated tube 48), and an electric wire portion (not illustrated) of the wire harness led out from the one end portion 48a of the corrugated tube 48 is arranged on the vehicle body side through an opening (not illustrated) on a deep side of the swing member 5. Further, the power supply device 1 illustrated in Figs. 3A and 3B is an example, and another power supply device (not illustrated) can be used on the vehicle body side in Fig. 1.

As illustrated in Fig. 4, in the power supply device 55 on the sliding door side, the support member 61 is formed by a vertical erection portion 70 and a cover portion 64 horizontally provided below the erection portion 70, a longitudinal cylindrical wall portion 89 of the swing portion 67 is rotatably supported by a horizontally openable-closable upper cover 63 of the erection portion 70 and a top board portion 69 of the lower cover portion 64, a transverse cylindrical harness lead-out portion 90 horizontally protrudes from the longitudinal cylindrical wall portion 89, and the other end portion 48b of the corrugated tube 48 is held in the harness lead-out portion 90 (a rib (not illustrated) on the inner surface of the harness lead-out portion 90 is engaged with the recessed groove 59 of the other end portion 48b of the corrugated tube 48).

The electric wire portion 88 of the wire harness arranged upward through the longitudinal cylindrical wall portion 89 from the other end portion 48b of the corrugated tube 48 is transversely arranged on the sliding door 54 through a substantially L-shaped tube portion 78 provided at an upper portion of the swing member 67. The substantially L-shaped tube portion 78 prevents foreign matters such as dust, sand, or water from entering into the swing member 67 from above. Further, the power supply device 55 illustrated in Fig. 4 is an example, and another power supply device (not illustrated) can be used on the sliding door side in Fig. 1.

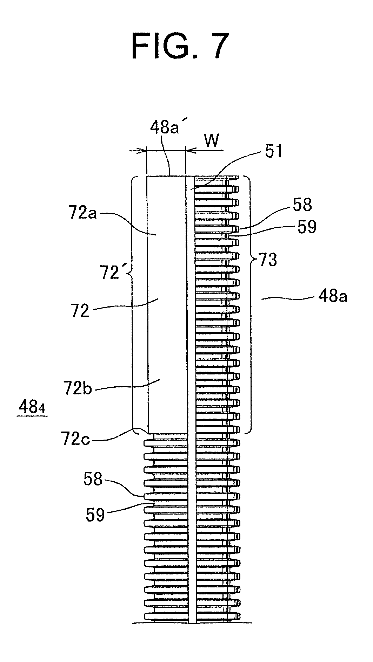

An example of using the rib 49 illustrated in Figs. 2A and 2B as a rigidity imparting portion of the one end portion 48a is described in the corrugated tube 48 illustrated in Figs. 1, 3A and 3B according to the embodiment, but instead of the rib on the one end portion 48a of the corrugated tube 48 in Figs. 2A and 2B, a hollow recessed portion 68 on one end portion 48a of a corrugated tube 48₂ illustrated in Figs. 5A and 5B, a shape 71 in which pitches of a bellows (uneven) portion on one end portion 48a of a corrugated tube 48₃ illustrated in Fig. 6 are changed, or a smooth and even surface portion 72 on one end portion 48a of a corrugated tube 48₄ illustrated in Fig. 7 can be also used as a rigidity imparting portion. The corrugated tubes 48₂ to 48₄ for each example are formed of a synthetic resin material. In Figs. 5A to 7, the same components as the corrugated tube 48 in Figs. 2A and 2B will be denoted by the same reference numerals, but the description thereof will not be presented.

The corrugated tube (protection tube) 48₂ illustrated in Figs. 5A and 5B is characterized in that the hollow recessed portion (recessed groove portion) 68 is formed on one sidewall (side surface) 50 of the one end portion 48a. The shape or pitch of recessed grooves 59 or projections 58 of the corrugated tube 48₂, the fact that the corrugated tube 48₂ has an oval cross-sectional shape, and the fact that ribs 51 for the sagging prevention are formed at ends on the long diameter side of the corrugated tube 48₂ are the same as the example in Figs. 2A and 2B, and thus the description thereof will not be presented.

The hollow recessed portion (recessed groove portion) 68 is formed in the center of the one sidewall 50 on the short diameter side of the corrugated tube 48₂ and is configured by a wide width portion (uniformly shaped portion) 68a having a uniform width which is linearly formed toward the other end from a tip (one end) 48a' of the corrugated tube 48₂ and a tapered narrow portion (gradually-changing shaped portion) 68b which is continuous to the other end from the wide width portion 68a and is gradually reduced in width in a tapered shape in the longitudinal direction of the tube. The length of the tapered narrow portion 68b is defined to be approximately equal to or longer than that of the wide width portion 68a.

As in the example of the rib 49 illustrated in Figs. 2A and 2B, the length ratio of the uniformly shaped portion 68a to the gradually-changing shaped portion 68b is appropriately set depending on a bending radius or the like of the corrugated tube 48₂. The rigidity imparting portion 68 can be also configured only by the gradually-changing shaped portion 68b by eliminating the uniformly shaped portion 68a. In this case, however, since the rigidity of the rigidity imparting portion 68 is decreased, there are concerns that the one end portion 48a of the corrugated tube 48₂ is difficult to maintain a straight shape and the bending of the one end portion 48a is allowed to some extent.

As illustrated in Figs. 5A and 5B, the wide width portion (uniformly shaped portion) 68a of the recessed portion (recessed groove portion) 68 is configured by an annular inner peripheral wall (bottom wall) 59a of the circumferential recessed groove 59 of the corrugated tube 48₂ and both of parallel sidewall portions 68c which are raised toward an annular outer peripheral wall 58a of the circumferential projection 58 from the inner peripheral wall 59a at a right angle at both ends in a width direction of the axial recessed portion 68, and both of the sidewall portions 68c is orthogonally continuous with the outer peripheral wall 58a. The tapered narrow width portion (gradually-changing shaped portion) 68b of the recessed portion 68 is configured by the inner peripheral wall 59a of the circumferential recessed groove 59 and both of sidewalls 68e which are raised toward the outer peripheral wall 58a of the projection 58 from the inner peripheral wall 59a at a right angle and approach each other toward a termination 68d, the terminations 68d of both sidewalls 68e intersect with each other at an acute angle (wedge shape), and the area of the inner peripheral wall 59a is gradually reduced toward the termination 68d.

Operation and effects of the rigidity imparting portion 68 including the wide width portion (uniformly shaped portion) 68a for imparting high rigidity to the corrugated tube 48₂ and the tapered narrow width portion (gradually-changing shaped portion) 68b for preventing the corrugated tube 48₂ from being folded and bent while imparting the rigidity is similar to operation and effects of the rib (rigidity imparting portion) 49, which is illustrated in Figs. 1, 3A and 3B, including the straight portion (uniformly shaped portion) 49a and the inclined portion (gradually-changing shaped portion) 49b in Figs. 2A and 2B and thus the description thereof will not be presented (in the description of the operation and effects in Figs. 1, 3A and 3B, the "rib 49" is replaced by the "recessed groove portion 68" and the operation and effects of the rib is replaced by the operation and effects of the recessed groove portion 68).

In the case of using the corrugated tube 48₂ illustrated in Figs. 5A and 5B, it is not necessary to form the groove 22 such that the rib 49 of Figs. 2A and 2B is inserted to the harness lead-out portion 21 of the swing member 5 of the power supply device on the vehicle body side of Figs. 3A and 3B. The tip 48a' side portion of the wide width portion (uniformly shaped portion) 68a of the recessed groove portion 68 in the corrugated tube 48₂ is inserted and held into/in the harness lead-out portion 21 of the swing member 5. This is also applied to the rib 49 of Figs. 2A and 2B, but when the uniformly shaped portion 68 is not inserted into the harness lead-out portion 21, this is because there is a concern that the one end portion 48a of the corrugated tube 48₂ is easily bent in the tip of the harness lead-out portion 21.

The recessed groove portion (rigidity imparting portion) 68 of the corrugated tube 48₂ of Figs. 5A and 5B is formed in such a manner that, for example, an annular resin material is subjected to extrusion molding, the annular resin material is subjected to the vacuum molding or pressure molding in circumferential projection/recessed portions on the inner side of a two-split type of mold to form the recessed grooves 59 and the projections 58, and the recessed groove portion 68 is partially and integrally molded in axial direction on the inner surface of one or the other mold which include a rectangular portion and a wedged portion.

The corrugated tube (protection tube) 48₃ of Fig. 6 is characterized in that a uniformly shaped portion 69 is formed such that widths W1 and W2 in the longitudinal direction of the tube of each of circumferential projections 75 and 76 of a bellows-shaped portion 71 in the one end portion 48a of the corrugated tube 48₃ are larger than a width W3 of each projection 58 of the bellows portion other than the one end portion 48a and that the width W1 of each projection 75 of one end-side (tip-side) half portion 69 of the one end portion 48a in the corrugated tube 48₃ is largest and is equal; and a gradually-changing shaped portion 70 is formed such that the width W2 of the projection 76 of a base end-side half portion 70 of the one end portion 48a is slowly (gradually) reduced compared to the width W1 of each projection 75 of the one end-side (tip-side) half portion 69. The bellows-shaped rigidity imparting portion 71 is configured by the bellows-shaped uniformly shaped portion 69 and the bellows-shaped gradually-changing shaped portion 70.

The width W3 of a projection 58 other than the one end portion 48a of the corrugated tube 48₃ is equal to the width of the projection 58 of the corrugated tubes 48 and 48₂ illustrated in Figs. 2A and 2B or Figs. 5A and 5B, a width W4 in the longitudinal direction of the tube of each recessed groove 59 of the one end portion 48a in the corrugated tube 48₃ is equal to the width of each recessed groove 59 other than the one end portion 48a. In the one end portion 48a of the corrugated tube 48₃, the width W1 and pitch of the projection 75 on the one end-side half portion 69 are large, the width W2 and pitch of the projection 76 on the base end-side half portion 70 are medium, the width W3 and pitch of the projection 58 other than the one end portion 48a in the corrugated tube 48₃ are small, and the width W2 and pitch of the projection 76 on the base end-side half portion 70 are gradually reduced and slowly changed.

The tip side portion of the one end portion 48a of the corrugated tube 48₃ is inserted and held into/in the harness lead-out portion 21 of the power supply device 1 on the vehicle body side illustrated in Figs. 3A and 3B. A holding rib is provided on the inner surface of the harness lead-out portion 21 according to the pitch of the recessed groove 59 of the tip-side half portion 69 on the one end portion 48a of the corrugated tube 48₃. The corrugated tube 48₃ has the oval cross-sectional shape as in an example of Figs. 2A and 2B and Figs. 5A and 5B, and the rib 51 for preventing the sagging is provided at both ends on the long diameter side thereof.

The uniformly shaped portion 69 of the corrugated tube 48₃ can be also replaced by a part of the gradually-changing shaped portion 70 (only the gradually-changing shaped portion 70 is extended and formed by eliminating the uniformly shaped portion 69), but in this case, it is difficult to always linearly extend the one end portion 48a of the corrugated tube 48₃ led out from the power supply device 1 on the vehicle body side illustrated in Fig. 1 when the rigidity of the gradually-changing shaped portion 70 of the tip-side half portion 69 on the one end portion 48a of the corrugated tube 48₃ is not sufficiently high. This is also similarly applied to the example of Figs. 2A and 2B and Figs. 5A and 5B.

Operation and effects of the bellows-shaped portion(rigidity imparting portion) 71 configured by the large-pitch bellows portion (uniformly shaped portion) 69 including each of the wide projections 75 and each of the narrow recessed grooves 59 of the corrugated tube 48₃ and the pitch-gradually changed bellows portion (gradually-changing shaped portion) 70 including each of the gradually narrowed projections 76 and each of the narrow recessed grooves 59 is similar to operation and effects of the rib (rigidity imparting portion) 49, which is illustrated in Figs. 1, 3A and 3B, including the straight portion (uniformly shaped portion) 49a and the inclined portion (gradually deformable shape portion) 49b of the corrugated tube 48 illustrated in Figs. 2A and 2B and thus the description thereof will not be presented (in the description of the operation and effects in Figs. 1, 3A and 3B, the "rib 49" is replaced by the "rigid bellows-shaped portion 71" and the operation and effects of the rib is replaced by the operation and effects of the rigid bellows-shaped portion 71).

The bellows-shaped portion (rigidity imparting portion) 71 having different pitches of the corrugated tube 48₃ of Fig. 6 is formed in such a manner that, for example, when an annular resin material is subjected to extrusion molding and the annular resin material is subjected to vacuum molding or pressure molding in circumferential projection/recessed portions on the inner side of a two-split type of mold to form the recessed grooves 59 and the projections 58, the pitch of the projections 75 and 76 in the circumferential direction on the inner surface of one or the other mold is partially changed and thus the bellows-shaped portions 71 having different pitches can be partially and integrally molded.

The corrugated tube (protection tube) 48₄ illustrated in Fig. 7 is characterized by forming a rigidity imparting portion 72' including a smooth curved outer surface portion 72 or the smooth curved outer surface portion 72 and a smooth curved inner surface portion (not illustrated) on one side portion of the one end portion 48a by eliminating projections and recessed portions 58 and 59 on an outer surface of one side portion (radial half portion) of the one end portion 48a or by eliminating each of the projections and the recessed portions 58 and 59 on the outer surface and the inner surface.

Normal recessed grooves 59 and projections 58 are formed on the other side portion (radial half portion) 73 of the one end portion 48a in the corrugated tube 48₄, and the shape and pitch of each of the recessed grooves 59 and the projection 58 in a portion other than the one side portion of the one end portion 48a in the corrugated tube 48₄ are the same as in Figs. 2A and 2B and Figs. 5A and 5B.

In the example of Fig. 7, the smooth outer surface portion 72 on the one side portion of the one end portion 48a in the corrugated tube 48₄ is formed at a position which is about half of the depth of the recessed groove 59 in the middle portion continuous with the one end portion 49a, but the smooth outer surface portion 72 can be formed to have the same height as a top surface of the projection 58. Thus, the height of the smooth outer surface portion 72 can be appropriately set in the range between a bottom surface of the recessed groove 59 and the top surface of the projection 58.

The height of the smooth outer surface portion 72 of the corrugated tube 48₄ in the example of Fig. 7 is uniform and only the uniformly shaped portion 72a is formed, but, for example, as the inclined portion (gradually-changing shaped portion) 49b of the rib 49 illustrated in Figs. 2A and 2B, a tip-side half portion 72a of the smooth outer surface portion 72 illustrated in Fig. 7 is formed higher and thus can become the uniformly shaped portion (72a), and a base end-side half portion 72b of the smooth outer surface portion 72 is gradually inclined lower such that a base end (termination) 72c of the outer surface portion 72b has the same height as the bottom surface of the recessed groove 59 and thus can also become the gradually-changing shaped portion (72b).

In addition, as the recessed groove portion 68 of the corrugated tube 48₂ illustrated in Figs. 5A and 5B, it is also possible to form the gradually-changing shaped portion by gradually reducing the width W of the smooth outer surface portion 72 of the corrugated tube 48₄ illustrated in Fig. 7. In this case, the uniformly shaped portion is configured by the narrow smooth outer surface portion 72a, and the gradually-changing shaped portion is configured by the narrow smooth outer surface portion 72b which is gradually reduced in width.

The smooth outer surface portion (rigidity imparting portion) 72 of the corrugated tube 48₄ of Fig. 7 is formed in such a manner that, for example, when an annular resin material is subjected to extrusion molding and the annular resin material is subjected to vacuum molding or pressure molding in circumferential projection/recessed portions on the inner side of a two-split type of mold to form the recessed grooves 59 and the projections 58, the inner surface of one or the other mold is formed as a smooth curved surface not partially having the recessed portion and projection, and thus the smooth curved outer surface portion 72 is partially and integrally molded. In this case, the inner surface portion (not illustrated) as well as the outer surface portion 72 on the one end portion 48a of the corrugated tube 48₄ becomes a smooth curved surface.

In addition, after an annular resin material is subjected to extrusion molding and the annular resin material is subjected to vacuum molding or pressure molding in circumferential projection/recessed portions on the inner side of a two-split type of mold to form the recessed grooves 59 and the projections 58, each of the recessed grooves 59 on the outer side of the corrugated tube 48₄ is partially filled with the resin material by injection molding, so that a thick wall portion (rigidity imparting portion) 72 can be formed. In this case, the smooth outer surface portion (rigidity imparting portion) 72 can be obtained when the recessed groove 59 is filled up to the same height as the top surface of the projection 58, and a thick portion (rigidity imparting portion) 72 in which the top side of the projection 58 is exposed (protruded) can be obtained when the recessed groove 59 is filled in the range between the top surface of the projection 58 and the bottom surface of the recessed groove 59. Any structure is also effective. When the recessed groove 59 is filled with the resin material, the gradually-changing shaped portion 72b of the rigidity imparting portion 72' is formed by gradually lowering the height to which the recessed groove 59 is filled and the base end (termination) 72c of the gradually-changing shaped portion 72b is positioned at the same height as the bottom of the recessed groove 59.

Operation and effects of the rigidity imparting portion 72 including the smooth curved outer surface portion (uniformly shaped portion) 72a of the thick wall portion and the thick wall portion (gradually-changing shaped portion) 72b which is continuous with the outer surface portion (uniformly shaped portion) 72a and is gradually inclined lower is similar to operation and effects of the rib (rigidity imparting portion) 49, which is illustrated in Figs. 1, Figs. 3A and 3B, including the straight portion (uniformly shaped portion) 49a and the inclined portion (gradually-changing shaped portion) 49b illustrated in Figs. 2A and 2B and thus the description thereof will not be presented. Since the corrugated tube 48₄ illustrated in Fig. 7 has an oval cross-sectional shape, the smooth outer surface portion (rigidity imparting portion) 72 is formed at one side of the short diameter side and the rib 51 for preventing the sagging is formed at both ends on the long diameter side.

Further, in each example of Figs. 5A to 7, the corrugated tubes 48₂ to 48₄ can be also formed in a circular cross-section. In addition, it is also possible to use a bellows-shaped corrugated tube 48 made of rubber instead of the synthetic resin. A cut line for inserting the electric wire may be formed in the corrugated tube 48 in the longitudinal direction. Furthermore, instead of the bellows-shaped corrugated tube 48, a tube made of the synthetic resin or the like having the smooth outer peripheral surface and inner peripheral surface can be also used as the protection tube (in this case, the rigidity imparting portion 49 illustrated in Figs. 2A and 2B is applicable).

### Industrial Applicability

An arrangement structure of a power-supplying protection tube according to the present invention can be used to smoothly bend a wire harness equipped with the protection tube between, for example, a sliding door and a vehicle body of an automobile without causing buckling or the like, thereby improving bending durability of the wire harness equipped with the protection tube and can also be used to prevent interference between the protection tube and the vehicle body.

### Reference Signs List

48, 48₂, 48₃, 48₄: corrugated tube (protection tube)
48a: one end portion
49: rib (rigidity imparting portion)
49a, 68a, 69, 72a: uniformly shaped portion
49b, 68b, 70, 72b: gradually-changing shaped portion
50: 1 sidewall (side surface)
53: vehicle body (fixed structure body)
54: sliding door (sliding structure body)
68: concave portion (rigidity imparting portion)
71: pitch-changed bellows-shaped portion (rigidity imparting portion)
72: smooth outer surface portion (rigidity imparting portion)

## Claims

1. An arrangement structure of a power-supplying protection tube, wherein
a wire harness equipped with a bendable protection tube is swingably arranged between a fixed structure body and a sliding structure body,
a rigidity imparting portion is formed on a side surface of an end portion of the protection tube in the fixed structure body side, and
the end portion of the protection tube constantly extends in a linear manner by the rigidity imparting portion when the sliding structure body is opened and closed.

2. The arrangement structure of the power-supplying protection tube according to claim 1, wherein the rigidity imparting portion is configured by a uniformly shaped portion disposed on a tip side of the end portion of the protection tube and a gradually-changing shaped portion disposed on a base end side of the end portion.

3. The arrangement structure of the power-supplying protection tube according to claim 1 or 2, wherein the rigidity imparting portion is formed on only one of the side surface positioned in an opening direction when the sliding structure body is fully opened.

4. The arrangement structure of the power-supplying protection tube according to any of claims 1 to 3, wherein the end portion of the protection tube is disposed at an opening angle of 45 degrees or less in the opening direction of the sliding structure body when the sliding structure body is fully closed.
